# EUROPÄISCHE PATENTSCHRIFT

(11) **EP 0 471 876 B1**
(45) Veröffentlichungstag und Bekanntmachung des Hinweises auf die Patenterteilung: **08.06.1994**
(21) Anmeldenummer: 90116184.4
(22) Anmeldetag: 23.08.1990
(51) Int. Cl.: H02K 5/15, H02K 5/14

(54) **Motor-Getriebe-Antriebseinheit, insbesondere Kraftfahrzeug-Fensterheberantrieb**
Motor-gear-drive unit, especially motor vehicle window lifter drive
Unité d'entraînement à moteur-réducteur, notamment entraînement de lève-glaces pour véhicule automobile

(43) Veröffentlichungstag der Anmeldung: 26.02.1992
(73) Patentinhaber: SIEMENS AKTIENGESELLSCHAFT, 80333 München (DE)
(72) Erfinder: Kraft, Longin, D-8708 Gerbrunn (DE)

(56) Entgegenhaltungen:
- EP-A- 0 261 542
- DE-C- 1 031 878
- DE-U- 8 910 158
- GB-A- 2 152 295
- GB-A- 2 160 370
- US-A- 3 463 951

## Beschreibung

Die Erfindung bezieht sich auf eine Motor-Getriebe-Antriebseinheit, insbesondere Kraftfahrzeug-Fensterheberantrieb gemäß Oberbegriff des Anspruchs 1; eine derartige Antriebseinheit ist aus der US-A-34 63 951 bekannt.

Bei der bekannten vorgenannten Antriebseinheit ist in einem flachbauenden, einteiligen Motor-Getriebe-Gehäuse von der zunächst offenen Lagerdeckelseite ein zum Motorgehäuse in Abstand gehaltenes und durch ein Federelement schüttelfest abgestütztes Magnetgestell eingesteckt und anschließend durch stirnseitiges Anschrauben des gegen einen axialen Anschlag anliegenden Lagerdeckels abgeschlossen, in dem eine Bürstenplatte mit daran befestigten Kastenbürstenhaltern für den als Antrieb vorgesehenen Kommutatormotor gehalten sind.

Durch den Lagerdeckel ist ein Anschlußstecker isoliert und dichtend durchgeführt, der an seiner Innenseite eine freistehende Lötfahne zum Anschluß von zur Bürstenplatte führenden Leitungen aufweist. Die Rotorwelle ist einerseits in einer vom Lagerdeckel gehaltenen Kalotte und andererseits mit ihrem in das Getriebegehäuse verlängerten, eine Schnecke aufnehmenden Ende über ein Zylinderlager in dem Getriebegehäuse gelagert und läuft axial mit diesem Ende gegen den Anlaufpilz einer von außen mehr oder weniger weit axial tief in das Getriebegehäuse einschraubbaren Einstellschraube an.

Durch die DE-C-10 31 878 ist eine Anordnung zur Regelung und Festlegung des axialen Spiels der Rotorwelle, insbesondere eines Drehtransformator oder dergleichen bekannt, dessen an einem Ende offenes Gehäuse in der geschlossenen Stirnwand ein erstes Lager für das eine Ende der Welle und am offenen Ende eine Deckelplatte mit einem zweiten Lager für das andere Ende der Welle aufweist, wobei die axiale Lage der Deckelplatte und damit das axiale Spiel der Welle durch Drehen eines Halteringes eingestellt wird, der in das Gehäuse eingeschraubt ist und die Deckelplatte festhält, während ein Sperrglied die Lage des Halteringes gegenüber dem Gehäuse feslegt; mit der Deckelplatte kann eine axial davor liegende und mit Vorsprüngen in entsprechende Öffnungen der Deckelplatte ragende Bürstenplatte beim Drehen des Halteringes in einem an der Innenfläche des Motorgehäuses vorzusehenden Schraubengewindes axial verstellt werden.

Durch die DE-C2-36 35 987 ist außerdem eine elektrische Maschine bekannt, bei der ein Lagerschild als Blechrohling gefertigt durch eine Schweißverbindung mit dem Motorgehäuse verbunden wird, um zuvor zum Ausgleich von Maßtoleranzen der Welle sowie des Motorgehäuses durch verschieden tiefes Einschieben der Lagerschilde in das Motorgehäuse ausgleichen zu können.

Der konstruktive und montagetechnische Aufwand, insbesondere unter Berücksichtigung unterschiedlicher Leistungsdaten der Motor-Getriebe-Einheit und zum Zwecke einer in jedem Fall einfachen Einstellung des Axialspiels, läßt sich bei einer Antriebseinheit der eingangs genannten Art erfindungsgemäß durch die Lehre des Anspruchs 1 vorliegender Erfindung wesentlich vermindern; Ausgestaltungen dieser Erfindung sind jeweils Gegenstand der Unteransprüche.

Durch die erfindungsgemäße Konstruktion ist es möglich, einerseits ausgehend von einem Motor-Getriebe-Einheitsgehäuse eine Anpassung an unterschiedliche Leistungsdaten mit entsprechend unterschiedlicher axialer Länge des Rotors bzw. der zur Erregung im Motorgehäuse angeordneten Magnetschalen und andererseits zur Einstellung des jeweiligen Axialspiels die Lagerdeckel-Montageeinheit mit in einfacher Weise vormontierter und elektrisch anschlußkontaktierter Bürstenplatte sowie bei einfachster Konstruktion des Motorgehäuses in entsprechender unterschiedlicher axialer Einstecktiefe im Motorgehäuse feuchtigkeitsdicht zu fixieren. Die Fixierung des Lagerdeckels in seiner jeweiligen Betriebs-Einsteckendlage erfolgt in fertigungstechnisch besonders einfacher Weise nach einer Ausgestaltung der Erfindung durch eine Ultraschall-Schweißverbindung mit dem Motorgehäuse; als besondere einfache Abdichtung zwischen dem zur Anpassung und Einstellung axial verschiebbaren Lagerdeckel und dem Motorgehäuse ist der vorteilhaft relativ zum Motorgehäuse stufenlos axial verschiebbare Lagerdeckel mit einem zur benachbarten inneren Wandung des Motorgehäuses verlaufenden axialen Kragen versehen, in dem in einer umlaufenden Nut die Dichtung, insbesondere in Form eines O-Ringes axial verschiebesicher eingelegt ist.

Zur weiteren Minderung des fertigungstechnischen Aufwandes ist ein einstückiges, aus Kunststoff bzw. Aluminium gespritztes bzw. gegossenes Motor-Getriebe-Gehäuse vorgesehen, wobei in vorteilhafter Weise an den Lagerdeckel ein Steckergehäuse mit durch den Lagerdeckel dichtend geführten Steckerstiften mitangegossen ist, die an ihren inneren Enden bis zu einer im Lagerdeckel gehaltenen Bürstenplatte eines als Antrieb vorgesehenen Kommutatormotors geführt und mit den Anschlußverbindungen der Bürstenplatte kontaktiert sind.

Die Erfindung sowie weitere vorteilhafte Ausgestaltungen werden im folgenden anhand eines schematisch dargestellten Ausführungsbeispiels in der Zeichnung näher erläutert; darin zeigen:
- FIG 1: einen axialen Längsschnitt durch einen Kraftfahrzeug-Fensterheberantrieb,
- FIG 2: im einem vergrößerten Ausschnitt aus FIG 1 die aus Lagerdeckel, Bürstenplatte und Steckergehäuse mit Steckerstiften vormontierbare bzw. vorkontaktierbare Bauteileinheit.

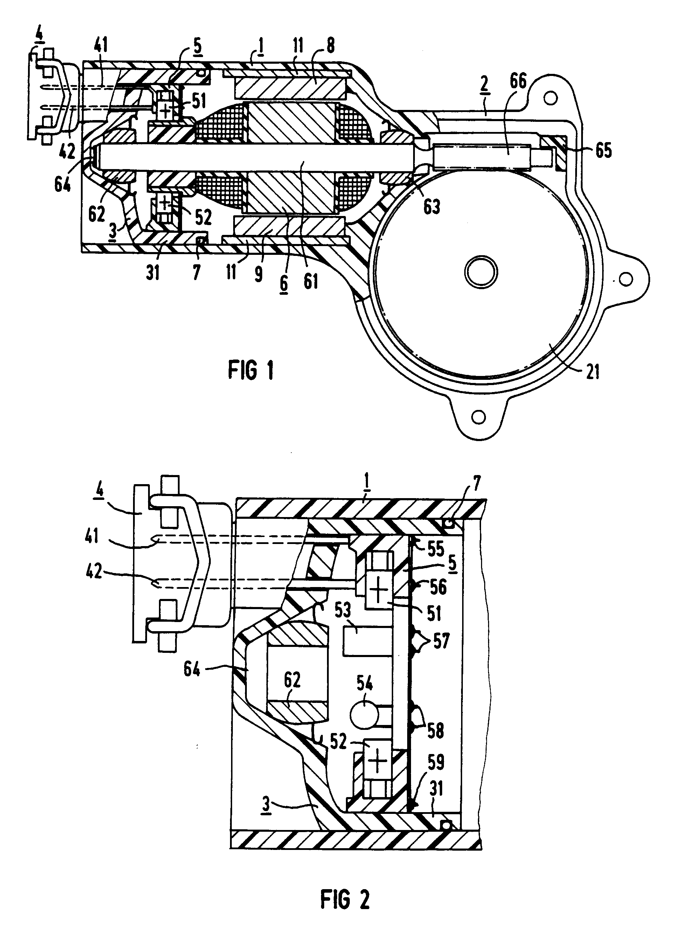

FIG 1-2 zeigen einen Kraftfahrzeug-Fensterheberantrieb mit einem Kommutatormotor in einem Motorgehäuse 1 und einem von dem Kommutatormotor angetriebenen Schneckengetriebe in einem Getriebegehäuse 2. Motorgehäuse 1 und Getriebegehäuse 2 sind Bestandteil eines einstückigen gegossenen Kunststoff- oder Aluminiumgehäuses. Als magnetischer Rückschluß für die im Motorgehäuse 1 zur Erregung vorgesehenen Magnetschalen 8,9 ist ein Rückschlußteil 11 in das Motorgehäuse 1 eingespritzt. Das linke offene Ende des in Umfangsrichtung geschlossenen Motorgehäuses 1 wird durch einen Lagerdeckel 3 dichtend abgeschlossen, der bei der Montage axial verschieblich mit einem axialen Kragen 31 an der inneren Wandung des Motorgehäuses 1 geführt anliegt und durch eine in einer Vertiefung des axialen Kragens 31 eingelegten Dichtung 7 in Form eines O-Ringes gegen das Motorgehäuse 1 nach außen feuchtigkeitsdicht abgeschlossen ist.

Der Rotor 6 des Kommutatormotors ist mit seiner u.a. einen Kommutator 67 aufnehmenden Rotorwelle 61 in Kalotten 62,63 gelagert, von denen die linke Kalotte in dem Lagerdeckel 3 und die rechte Kalotte im rechten Ende des topfförmigen Motorgehäuses 1 gehalten ist. Die Rotorwelle 61 läuft mit ihrem linken axialen Ende mit einem Anlaufpilz 64 gegen den Lagerdeckel 3 und mit ihrem rechten, in das Getriebegehäuse 2 verlängerten, eine Schneckenwelle 66 aufnehmenden Ende gegen ein Stützlager 65 an.

In dem Lagerdeckel 3 ist eine Bürstenplatte 5 gehalten, an der den Kommutator 67 beschleifende Bürsten 51,52 geführt gehalten sind. An die linke Stirnseite des Lagerdeckels 3 ist in vorteilhafter Weise ein Steckergehäuse 4 einstückig mitangespritzt, in dem Steckerstifte 41,42 dichtend durchgesteckt sind, die mit ihrem inneren Ende bis zur Bürstenplatte 5 reichen und dort über Lötstellen 55, 56 vorzugsweise durch Tauchlöten gleichzeitig mit auf der Bürstenplatte 5 gehaltenen und über Lötstellen 57 bzw. 58 bzw. 59 kontaktierten Thermowächter 53 bzw. Kondensator 54 bzw. Bürsten 51,52 mit deren Anschlußverbindungen kontaktiert sind.

In vorteilhafter Weise wird der Lagerdeckel 3 - gemäß Darstellung in FIG 2 - mit der darin gehaltenen Bürstenplatte 5 und den mit dieser kontaktierten Steckerstiften 41,42 und weiteren Bauelementen wie z.B. Kalottenlager 62, Thermowächter 53 bzw. Kondensator 54 als Montageeinheit vormontiert und dann in das Motorgehäuse 1 bis zur vorgesehenen Betriebslage eingesteckt und in dieser Betriebsendlage durch Ultraschallverschweißung mit dem Motorgehäuse 1 fixiert. Die Betriebsendlage ist einerseits durch die je nach Leistungsgröße des Motors axiale Länge des Kommutatormotors, insbesondere hinsichtlich seiner Rotorwicklung und seiner für die Erregung vorgesehenen Magnetschalen 8,9 und zum anderen durch das geforderte Axialspiel bestimmt. Es dürfte ersichtlich sein, daß durch je nach im Einzelfall bei der Montage sich ergebende Toleranzkette mehr oder weniger tiefes Eintauchen des sich dabei selbstdichtend am Motorgehäuse 1 abstützenden Lagerdeckels 3 eine einfache Einstellung des Axialspiels möglich ist, wobei eine Zugänglichkeit von außen und damit das Problem einer zusätzlichen Abdichtung der Motor-Getriebe-Antriebseinheit nicht notwendig ist.

## Patentansprüche

1. Motor-Getriebe-Antriebseinheit, insbesondere Kraftfahrzeug-Fensterheberantrieb o. dgl., mit einem in Umfangsrichtung geschlossenen Motorgehäuse (1) eines Kommutatormotors mit anschließendem Getriebegehäuse (2) an seinem einen axialen Ende sowie abschließendem Lagerdeckel (3) an seinem anderen axialen Ende, **dadurch gekennzeichnet,** daß der Lagerdeckel (3) mit einer innen gehalterten Bürstenplatte (5) und mit dieser kontaktierten, nach außen dichtend durch den Lagerdeckel (3) führenden Steckerstiften (41, 42) als vormontierbare Bauteileinheit relativ zum Motorgehäuse (1) durch einen außen umlaufenden Dichtring (7) dicht abschließend axial stufenlos durch Einstecken verschieblich und in seiner jeweiligen Einsteck-Betriebsendlage am Motorgehäuse (1) fixierbar ist.

2. Motor-Getriebe-Einheit nach Anspruch 1, **dadurch gekennzeichnet,** daß der Dichtring (7) in einer umlaufenden Nut auf einem parallel zur benachbarten Wandung des Motorgehäuses (1) verlaufenden axialen Kragen (31) des Lagerdeckels (3) axial verschiebesicher gehalten ist.

3. Motor-Getriebe-Einheit nach zumindest einem der Ansprüche 1 oder 2, **dadurch gekennzeichnet,** daß der Lagerdeckel (3) in seiner Betriebsendlage durch eine Ultraschallschweißverbindung an dem Motorgehäuse (1) fixiert ist.

4. Motor-Getriebe-Einheit nach zumindest einem der Ansprüche 1 bis 3, **gekennzeichnet durch** ein an den Lagerdeckel (3) mitangespritztes bzw. mitangegossenes Steckergehäuse (4) zur Aufnahme der durch den Lagerdeckel (3) dichtend geführten Steckerstiften (41, 42).

5. Motor-Getriebe-Einheit nach Anspruch 4, **dadurch gekennzeichnet,** daß die Steckerstifte (41, 42) an ihren inneren Enden bis zur dem Lagerdeckel (3) abgewandten Rückseite der Bürstenplatte (5) des Kommutatormotors reichen und mit deren übrigen Anschlußverbindungen, insbesondere durch Tauchlöten, kontaktiert (Lötstellen 55,56) sind.

6. Motor-Getriebe-Antriebseinheit nach einem der Ansprüche 1-5, **dadurch gekennzeichnet,** daß ein einstückiges gespritztes bzw. gegossenes Motor-Getriebe-Gehäuse (1,2) aus nichtmagnetischem Material, insbesondere aus Kunststoff bzw. Aluminium, mit einem gesonderten, insbesondere in bzw. an das Motor-Getriebe-Gehäuse gespritzten bzw. gegossenen, magnetischen Motor-Rückschlußteil (11) vorgesehen ist.

7. Motor-Getriebe-Einheit nach zumindest einem der Ansprüche 1 bis 6, **gekennzeichnet durch** eine Axialspieleinstellung mittels des relativ zum Motorgehäuse (1) axial verschiebbaren Lagerdeckels (3).

## Claims

1. Motor/gear-train drive unit, in particular a motor vehicle window lifter drive or similar, having a motor housing (1) of a commutator motor closed in the circumferential direction and having a gear case (2) attached at one axial end and a closing bearing cap (3) at the other axial end thereof, characterised in that the bearing cap (3) can be secured with an internally mounted brush plate (5) and plug pins (41, 42) which are bonded to this brush plate (5) and pass through the bearing cap (3) towards the outside in a sealed manner, as a pre-assembled subassembly, so that it can be progressively displaced axially by insertion relative to the motor housing (1) in a tightly sealed manner by means of an outer circumferential sealing ring (7) and can be secured to the motor housing (1) in its respective final inserted operating position.

2. Motor/gear-train unit according to claim 1, characterised in that the sealing ring (7) is held secure against axial displacement in a circumferential groove on an axial collar (31) of the bearing cap (3), which groove extends parallel to the adjacent wall of the motor housing (1).

3. Motor/gear-train unit according to at least one of claims 1 or 2, characterised in that the bearing cap (3) can be secured to the motor housing (1) in its final operating position by means of an ultrasonically welded joint.

4. Motor/gear-train unit according to at least one of claims 1 to 3, characterised by a plug casing (4) integrally injection-moulded or cast on the bearing cap (3) for accommodating the plug pins (41, 42) which pass through the bearing cap (3) in a sealed manner.

5. Motor/gear-train unit according to claim 4, characterised in that, at their inner ends, the plug pins (41, 42) reach as far as the rear side of the brush plate (5) of the commutator motor, which rear side faces away from the bearing cap (3), and are bonded to the remaining connecting terminals of the brush plate (5), in particular by dip soldering (soldering points 55, 56).

6. Motor/gear-train drive unit according to one of claims 1 to 5, characterised in that a one-piece injection-moulded or cast motor/gear-train housing (1, 2) made of non-magnetic material, in particular plastics or aluminium, is provided with a separate magnetic motor return path part (11) which, in particular, is injection-moulded or cast in or on the motor/gear-train housing.

7. Motor/gear-train unit according to at least one of claims 1 to 6, characterised by adjustment of axial play by means of the bearing cap (3) which can be displaced axially relative to the motor housing (1).

## Revendications

1. Unité d'entraînement à moto-réducteur, notamment dispositif d'entraînement de lève-glace de véhicule automobile ou analogue, comportant un carter (1), fermé dans la direction circonférentielle, d'un moteur à collecteur auquel est raccordé un boîtier de transmission (2) à l'une de ses extrémités axiales, avec un capot d'extrémité formant palier (3) à son autre extrémité axiale, caractérisée par le fait que le capot (3) ayant une plaque porte-balais (5), qui est fixée intérieurement, et des broches de connecteurs (41, 42) placées en contact avec cette plaque et ressortant d'une manière étanche à l'extérieur à travers le capot (3) est, en tant qu'unité pouvant être préassemblée, mobile axialement progressivement, en étant enfilée, par rapport au carter (1) du moteur, en établissant une fermeture étanche au moyen d'une bague (7) d'étanchéité circonférentielle extérieure, et peut être immobilisée dans sa position finale enfilée de fonctionnement, sur le carter (1) du moteur.

2. Unité à moto-réducteur suivant la revendication 1, caractérisée par le fait que la bague d'étanchéité (7) est retenue avec blocage contre tout déplacement axial, dans une gorge circonférentielle ménagée dans un collet axial (31) du capot (3), qui est parallèle à la paroi voisine du carter (1) du moteur.

3. Unité à moto-réducteur suivant au moins l'une des revendications 1 ou 2, caractérisée par le fait que le capot (3) est immobilisée, dans sa position finale de fonctionnement, au moyen d'une liaison soudée par ultrasons sur le carter (1) du moteur.

4. Unité à moto-réducteur suivant au moins l'une des revendications 1 à 3, caractérisée par un boîtier (4) du connecteur, qui est conjointement moulé par injection ou coulé sur le capot (3) et qui sert à recevoir les broches de connecteurs (41, 42) qui traversent de façon étanche le capot (3).

5. Unité à moto-réducteur suivant la revendication 4, caractérisée par le fait que les broches de connecteurs (41, 42) s'étendent, par leurs extrémités intérieures, jusqu'à la face arrière, tournée à l'opposé du capot (3), de la plaque porte-balais (5) du moteur à collecteur et qu'un contact est établi, notamment par brasage par immersion (zones de brasage 55, 56), pour leurs autres liaisons de raccordement.

6. Unité à moto-réducteur suivant l'une des revendications 1-5, caractérisée par le fait qu'il est prévu un carter (1, 2) du moto-réducteur, moulé par injection ou coulé d'un seul tenant, qui est en un matériau amagnétique, notamment en matière plastique ou en aluminium, comportant une pièce magnétique distincte de retour (11), moulée par injection ou coulée dans ou sur le carter du moto-réducteur.

7. Unité à moto-réducteur suivant au moins l'une des revendications 1 à 6, caractérisée par un réglage du jeu axial à l'aide du capot (3), qui est mobile axialement par rapport au carter (1) du moteur.
